# EUROPÄISCHE PATENTSCHRIFT

(11) **EP 2 516 135 B1**
(45) Veröffentlichungstag und Bekanntmachung des Hinweises auf die Patenterteilung: **02.03.2016**
(21) Anmeldenummer: 10798517.8
(22) Anmeldetag: 23.12.2010
(51) Int. Cl.: B29C 63/02, B60R 13/02

(54) **VERFAHREN ZUM AUFBRINGEN UND BEFESTIGEN EINER DEKORSCHICHT**
METHOD FOR APPLYING AND FASTENING A DECOR LAYER
PROCÉDÉ D'APPLICATION ET DE FIXATION D'UNE COUCHE DE DÉCORATION

(30) Priorität: 23.12.2009 DE 102009060206
(43) Veröffentlichungstag der Anmeldung: 31.10.2012
(73) Patentinhaber: Faurecia Innenraum Systeme GmbH, 76767 Hagenbach (DE)
(72) Erfinder: SCHILLES, Wilfried, 76870 Kandel (DE); LEIDIG, Hildegard, 57548 Kirchen/Sieg (DE)
(74) Vertreter: Schatt, Markus F.
(86) Internationale Anmeldenummer: PCT/EP2010/007922
(87) Internationale Veröffentlichungsnummer: WO 2011/076426

(56) Entgegenhaltungen:
- EP-A2- 1 211 051
- DE-A1-102008 021 559
- DE-B3-102007 008 557

## Beschreibung

Die Erfindung betrifft ein Verfahren zum Aufbringen und Befestigen einer Dekorschicht auf einem Vorformling zur Bildung eines Trägerteils.

Aus der DE 10 2008 021 559 A1, der EP 1 211 051 A2 und der DE 10 2007 008 557 B3 ist jeweils ein Verfahren und eine Vorrichtung zur Herstellung eines Verkleidungsteils bekannt, das eine Nut aufweist.

Derartige Verfahren sind bekannt, um Dekorschichten, wie beispielsweise Leder oder Lederimitate, auf Vorformlinge aus Kunststoff aufzubringen, wobei das entstehende Trägerteil eine Verkleidung oder ein Teil einer Verkleidung eines Innenraums eines Kraftfahrzeuges darstellt. Dabei werden für solche Verkleidungen üblicherweise unterschiedliche Dekorschichten bzw. Bereiche mit Dekorschicht und Bereiche ohne Dekorschicht auf einer Verkleidung gemeinsam verwendet. Problematisch ist bei den bekannten Verfahren, dass die Übergänge zwischen Bereichen unterschiedlicher Dekorschichten bzw. zwischen einem Bereich mit Dekorschicht und einem Bereich ohne Dekorschicht zu optischen Beeinträchtigungen neigen. So ist beispielsweise beim Verkleben der Dekorschicht auf dem Vorformling die Gefahr gegeben, dass Teile des Klebstoffs aus dem Rand der Dekorschicht austreten und an diesem Rand verhärten. Es entstehen also Klebernasen, welche entfernt werden müssen, was zusätzlichen Aufwand bedeutet.

Darüber hinaus sind die Übergänge zwischen einzelnen Dekorschichten bzw. der Übergang von Dekorschicht auf einen Bereich ohne Dekorschicht deswegen problematisch, da dort ein Spalt oder sogar eine Stufe besteht. Ein solcher Spalt oder Stufe kann den Fahrer eines Kraftfahrzeuges dazu veranlassen, in diesem Bereich über einen längeren Zeitraum immer wieder mit den Fingern zu spielen und die Dekorschicht damit vom Vorformling zu lösen. Auch bergen solche Spalte oder Stufen die Gefahr, dass sich darin Dreck, Staub oder Reste aus dem Produktionsverfahren wie Klebstoff ablagern und eine unansehnliche Optik erzeugen.

Aufgabe der vorliegenden Erfindung ist es, die voranstehend beschriebenen Nachteile der bekannten Verfahren zu lösen.

Die voranstehende Aufgabe wird gelöst durch ein Verfahren gemäß dem unabhängigen Anspruch 1.

Ein erfindungsgemäßes Verfahren zum Aufbringen und Befestigen einer Dekorschicht auf einem Vorformling zur Bildung eines Trägerteils verwendet einen Vorformling, welcher einen mit der Dekorschicht zu kaschierenden ersten Abschnitt und einen daran im Konturverlauf des Vorformlings anschließenden zweiten Abschnitt aufweist. Der erste Abschnitt verläuft entlang einer Nut-Tiefenrichtung einer durch einen Verbindungsabschnitt gebildeten Nut und ein erster Bereich des Verbindungsabschnittes schließt an den ersten Abschnitt des Vorformlings an. Ein zweiter Bereich des Verbindungsabschnitts ist zwischen dem ersten Bereich des Verbindungsabschnitts und dem zweiten Abschnitt des Vorformlings gelegen und bei vorbestimmten Prozessbedingungen deformierbar.

Insbesondere weist der Vorformling auf: einen mit der Dekorschicht zu kaschierenden ersten Abschnitt, einen zweiten Abschnitt und einen diese Abschnitte verbindenden Verbindungsabschnitt, der eine sich in einer Längsrichtung erstreckende und in einer Nut-Tiefenrichtung ausgeprägte Nut aufweist sowie aus einem sich entlang der Nut-Längsrichtung und dem ersten Abschnitt erstreckenden ersten Bereich und einem an diesem anschließenden und sich entlang der Nut-Längsrichtung und dem zweiten Abschnitt des Vorformlings erstreckenden zweiten, die Nut ausbildenden Bereich gebildet ist, wobei der zweite Bereich des Verbindungsabschnitts aus einem bei vorbestimmten Prozessbedingungen deformierbaren Material gebildet ist.

Dabei weist das Verfahren nach der Erfindung insbesondere die folgenden Schritte auf:
- Zusammenfahren eines ersten Werkzeuges, wobei in das erste Werkzeug der erste Abschnitt des Vorformlings zusammen mit der Dekorschicht eingelegt ist und wobei ein Endabschnitt der Dekorschicht zumindest einen Teil des ersten Bereichs des Verbindungsabschnittes bedeckt,
- Auflegen des zweiten Abschnittes des Vorformlings auf ein zweites Werkzeug,
- Bewegen des ersten und des zweiten Werkzeuges relativ zueinander in der Nut-Tiefenrichtung, wodurch der zweite Bereich des Verbindungsabschnittes derart deformiert wird, dass dieser eine Nut mit sich vergrößernder Nuttiefe bildet und wobei die relative Bewegung der Werkzeuge zueinander derart erfolgt, dass der Endabschnitt der Dekorschicht in Nut-Tiefenrichtung in die Nut eingeführt wird, und
- Zusammendrücken der Nutseitenwände zum Fixieren des Endabschnittes der Dekorschicht in der Nut.

Mit anderen Worten wird bei einem erfindungsgemäßen Verfahren ein Verbindungsabschnitt bearbeitet, welcher zwei unterschiedliche Bereiche aufweist. Der erste Bereich ist dabei unter bestimmten Prozessbedingungen deformierbar, während im Gegenzug der zweite Bereich unter eben diesen Prozessbedingungen nicht deformierbar ist. Solche Prozessbedingungen können durch Parameter wie Druck, Temperatur, relative Feuchte oder andere Prozessparameter definiert werden. Bei der Verwendung eines Vorformlings aus Kunststoffmaterialien, beispielsweise einem thermoplastischen Material, ist insbesondere als Steuerparameter für die Prozessbedingungen der Deformierbarkeit die Bearbeitungstemperatur zu verwenden. Beim Erhöhen der Temperatur entstehen Prozessbedingungen, bei welchen der erste Bereich undeformierbar bleibt und der zweite Bereich deformierbar wird. Dies kann beispielsweise durch unterschiedliche Materialien mit unterschiedlichen Elastizitätsdeformationspunkten /-temperaturen oder durch unterschiedliche Materialdicken der einzelnen Bereiche erzielt werden.

Nach dem Einlegen des Abschnitts kann somit durch das Zusammenfahren der Werkzeuge die Dekorschicht auf dem ersten Abschnitt des Vorformlings örtlich festgelegt werden. Für diese örtliche Festlegung ist nicht zwingend ein Verschweißen oder ein Verkleben notwendig. Durch das Zusammenfahren des ersten Werkzeugs ist vielmehr auch eine Definition des Ortes der Dekorschicht ohne jegliche zusätzliche Fixierhilfsmittel möglich.

In einem weiteren Schritt wird der zweite Abschnitt des Vorformlings auf ein zweites Werkzeug gelegt, welches unabhängig von dem ersten Werkzeug zu verfahren ist. Das erste Werkzeug und das zweite Werkzeug werden relativ zueinander in Nut-Tiefenrichtung bewegt. Dabei ist darauf hinzuweisen, dass unter dem Begriff "Nut-Tiefenrichtung " eine Richtung gemäß eines bewegten Koordinatensystems definiert ist. Dieses Koordinatensystem ist an dem Trägerteil, insbesondere dem Vorformling, festgelegt und hat in den drei Dimensionen die drei Richtungen Breitenrichtung, Längsrichtung und Nut-Tiefenrichtung. Die Breiten- und Längsrichtung spannen dabei im Wesentlichen die Ebene auf, in welcher sich die Hauptflächen des Vorformlings erstrecken. Insbesondere die Kanten zwischen den beiden Abschnitten des Vorformlings und dem Verbindungsabschnitt verlaufen dabei in Längsrichtung. Die Breitenrichtung ist dementsprechend senkrecht zur Längsrichtung ausgerichtet. Die Nut-Tiefenrichtung steht senkrecht auf sowohl der Längsrichtung, als auch der Breitenrichtung des Vorformlings und erstreckt sich im Bereich des Verbindungsabschnitts in Richtung des Grundes der Nut.

Unter relativer Bewegung des ersten Werkzeugs und des zweiten Werkzeugs zueinander kann sowohl eine Bewegung beider Werkzeuge, als auch nur jeweils eines der beiden Werkzeuge verstanden werden. So kann konstruktiv ein Werkzeug fest ausgelegt sein, während nur das andere Werkzeug zur Bewegung ausgelegt ist. Durch diese Relativbewegung der beiden Werkzeuge zueinander wird die Dekorschicht in Nut-Tiefenrichtung in die Nut eingeführt. Durch dieses Einführen in die Nut wird das Fixieren der Dekorschicht auf dem Vorformling vorbereitet. Im letzten Schritt des erfindungsgemäßen Verfahrens werden die Nutseitenwände des Verbindungsabschnittes zusammengedrückt und die Dekorschicht damit in der Nut verklemmt, bzw. fixiert. Durch das Einfahren der Dekorschicht in definierter Position, nämlich definiert durch das erste Werkzeug, kann auf einen Kleber verzichtet werden und die örtliche Festlegung des Endabschnitts der Dekorschicht in der Nut kann ohne weitere Fixierungsmittel erfolgen. Das Fixieren der Dekorschicht auf dem Vorformling erfolgt dann ausschließlich durch das Verklemmen in der Nut.

Bei einem erfindungsgemäßen Verfahren kann weiter vorteilhaft sein, wenn durch das Zusammendrücken der Nutseitenwände ein fugenloser Übergang zwischen der Dekorschicht und dem zweiten Abschnitt des Vorformlings ausgebildet wird. Unter dem Begriff "fugenloser Übergang" ist dabei insbesondere die Erzeugung eines sogenannten Nullspaltes als vorteilhaft anzusehen. Das bedeutet, dass zwischen dem Bereich mit der Dekorschicht und dem Bereich ohne Dekorschicht, also zwischen der Dekorschicht und dem zweiten Abschnitt des Vorformlings ein möglichst kleiner, insbesondere kein Spalt entsteht. Kein Spalt ist dabei im dem technischen Sinn zu verstehen, so dass in den tatsächlich vorhandenen Spalt keine Finger sowie auch kein Staub oder sonstige Verschmutzungen eindringen können. Die Erzeugung eines derartigen fugenlosen Übergangs hat zur Folge, dass dieser Bereich der Dekorschicht nicht vom Nutzer eines Kraftfahrzeuges mit seinen Fingern negativ beeinflusst werden kann. Darüber hinaus kann in eine nicht vorhandenen Spalte auch kein Schmutz oder Staub eindringen, wodurch sich die Optik eines erfindungsgemäß hergestellten Trägerteils weiter verbessert.

Weiter kann es vorteilhaft sein, wenn bei einem erfindungsgemäßen Verfahren vor dem Schritt des Zusammendrückens der Nutseitenwände der Endabschnitt der Dekorschicht an beiden Nutseitenwänden der Nut anliegt. Dies ist beispielsweise dadurch möglich, dass das erste Werkzeug nicht mit in die Nut des Verbindungsabschnitts hineinfährt. Vielmehr ist in einer solchen Ausgestaltungsform das erste Werkzeug dazu in der Lage, den Endabschnitt der Dekorschicht in die Nut hineinzuführen, bewegt sich selbst jedoch nicht mit in diese Nut. Auf diese Weise ist bereits vor dem Zusammendrücken der Nutseitenwände der Ort der Dekorschicht sowohl auf dem ersten Abschnitt, als auch in dem Verbindungsabschnitt des Vorformlings exakt definiert. Diese exakte Definition ist notwendig, um eine exakte Endpositionierung der Dekorschicht auf dem Vorformling nach dem Zusammendrücken zu erhalten. Durch diese exakte Positioniermöglichkeit gemäß einem erfindungsgemäßen Verfahren ist es möglich, gänzlich auf Klebstoffe oder sonstige Fixierhilfsmittel wie beispielsweise Schweißmaterialien wie thermoplastische Kunststoffe zu verzichten.

Ebenfalls vorteilhaft kann es sein, wenn die Dekorschicht auf dem Vorformling ausschließlich mittels Klemmung zwischen den Nutseitenwänden befestigt wird. Diese Klemmung kann insbesondere dadurch erzielt werden, dass eine Deformation der Nutseitenwände zusammen mit einer Deformation der Dekorschicht erfolgt. Auf diese Weise entsteht ein Materialschluss zwischen der Dekorschicht und den Nutseitenwänden des Verbindungsabschnitts. Ein solcher Materialschluss kann noch verbessert werden, wenn der Bereich des Verbindungsabschnittes unter Wärmeeinfluss gebracht wird und die Dekorschicht und/oder die Nutseitenwände des Verbindungsabschnitts aus thermoplastischen Materialien gefertigt sind. In einem solchen Fall kann neben dem reinen Zusammendrücken und damit erzeugten Verpressen ein erhöhter Materialschluss durch teilweises Aufschmelzen erzeugt werden.

Bei Verfahren mit Materialien, welche sich durch thermische Beeinflussung negativ entwickeln würden, kann auf ein solches thermisches Verfahren verzichtet werden, da durch den Materialschluss aber auch durch beispielsweise Aufrauen der Oberflächen der Nutseitenwände eine erhöhte Reibung zwischen den Nutseitenwänden und der Dekorschicht innerhalb des Verbindungsabschnittes erzeugt werden kann. Diese erhöhte Reibung ermöglicht ein reines Klemmen, so dass die Position der Dekorschicht auf dem Vorformling exakt definiert wird ohne eine thermische Behandlung oder ein Verkleben erforderlich zu machen. Auf diese Weise können auch sensible Materialien mit dem erfindungsgemäßen Verfahren bearbeitet werden und zusätzlich eine verbesserte Optik an dem Stoß zwischen Dekorschicht und Abschnitt ohne Dekorschicht erzeugt werden.

Bei einem erfindungsgemäßen Verfahren kann es vorteilhaft sein, wenn die Bewegung des ersten Werkzeugs und des zweiten Werkzeugs relativ zueinander in der Nut-Tiefenrichtung eine Parallelverschiebung der beiden Abschnitte des Vorformlings relativ zueinander ist. Dabei ist unter dem Begriff "Parallelverschiebung" neben einer geraden Verschiebeung auch eine winklige Parallelverschiebung denkbar. Eine winklige Parallelverschiebung kann unter anderem dann sinnvoll sein, wenn der Schritt des Zusammendrückens gemeinsam mit dem Schritt der relativen Bewegung der beiden Werkzeuge zueinander vollzogen werden soll. Auf diese Weise kann das erste Werkzeug den ersten Abschnitt zusammen mit der Dekorschicht winklig zum zweiten Werkzeug und damit auch winklig zum zweiten Abschnitt des Vorformlings verfahren. Auf diese Weise wird die Nut des Verbindungsabschnittes während dieses Vorganges nicht nur in ihrer Tiefe verändert sondern auch in ihrer Breite verringert. Mit anderen Worten erfolgt durch ein solches winkliges Zusammenfahren mittels Parallelverschiebung das Einführen der Dekorschicht in die Nut gleichzeitig mit dem Zusammendrücken der Nutseitenwände zum Fixieren der Dekorschicht in derselben.

Weiter kann es vorteilhaft sein, wenn bei einem erfindungsgemäßen Verfahren die Bewegung des ersten Werkzeuges und des zweiten Werkzeuges relativ zueinander in Nut-Tiefenrichtung eine aus Parallelverschiebung und Rotation kombinierte Bewegung der beiden Abschnitte des Vorformlings relativ zueinander ist. Eine solche Rotation ist insbesondere bei der Verwendung von relativ dicken Dekorschichten sinnvoll. Auf diese Weise sind die beiden Vorgänge des Einführens der Dekorschicht in die Nut und des Fixierens der Dekorschicht in der Nut voneinander getrennt. Das Einführen kann somit bei einer relativ breiten Nut erfolgen, während anschließend durch Rotation des ersten Werkzeuges oder auch durch eine weitere Parallelverschiebung in diesem Fall in Breitenrichtung des Vorformlings, ein Zusammendrücken der Nutseitenwände erfolgt. Damit wird in diesem zweiten Schritt die Dekorschicht in der Nut fixiert und dadurch örtlich zum Vorformling exakt definiert.

Wie bereits voranstehend erläutert, kann es vorteilhaft sein, wenn die Bewegung des ersten und des zweiten Werkzeugs relativ zueinander in der Nut-Tiefenrichtung gleichzeitig auch die Nutseitenwände zusammendrückt. Ein solch kombiniertes Verfahren ist insbesondere hinsichtlich der Zeitersparnis von Vorteil, da in einer geringeren Zeit durch die Ausführungen zweier Bewegungen und damit zweier Verfahrensschritte gleichzeitig das gewünschte Trägerteil schneller gefertigt werden kann.

Weiter kann es vorteilhaft sein, wenn bei einem erfindungsgemäßen Verfahren zumindest ein Teil eines der beiden Werkzeuge erhitzbar ist, um den an diesem Teil anliegenden Abschnitt des Vorformlings und/oder die an diesem Teil anliegende Dekorschicht zu erwärmen. Auf diese Weise ist neben dem reinen Formschluss, beispielsweise durch Klemmung, oder Fixierung durch Reibung in der Nut ein zusätzlicher Materialschluss möglich. Beispielsweise bei der Verwendung von thermoplastischen Materialien für den Vorformling und/oder für die Dekorschicht kann durch die thermische Beeinflussung ein Teil dieser Bereiche aufgeschmolzen werden und sich durch das Zusammendrücken und anschließende Erkalten formschlüssig miteinander verbinden. Mit anderen Worten kann an dieser Stelle zusammen mit dem Zusammendrücken der beiden Nutseitenwände zusätzlich ein Schweißschritt der Dekorschicht mit dem Vorformling vollzogen werden.

Weiter kann es vorteilhaft sein, wenn die Bewegung des ersten und des zweiten Werkzeugs relativ zueinander in der Nut-Tiefenrichtung so weit ausgeführt wird, dass anschließend die sichtbare Oberseite der Dekorschicht bündig mit dem der sichtbaren Oberseite des zweiten Abschnitt des Vorformlings liegt. Das Ergebnis eines erfindungsgemäßen Verfahrens hat somit einen bündigen Übergang eines Trägerteils zwischen dem Abschnitt mit Dekorschicht und dem Abschnitt ohne Dekorschicht. Für den Nutzer eines Kraftfahrzeuges, in welchem ein mit dem erfindungsgemäßen Verfahren hergestelltes Trägerteil als Seitenblende eingebaut ist, entsteht somit eine verbesserte Optik Drüber hinaus kann er beim Bewegen seiner Finger über diesen Stoß als haptisches Erlebnis einerseits die Dekorschicht, andererseits die Trägerschicht erfühlen, ohne zwischen diesen beiden Abschnitten eine Stufe, einen Spalt oder einen ähnlichen Hinweis auf diese beiden unterschiedlichen Abschnitte zu erhalten. Die Wertigkeit der Haptik und auch die Wertigkeit der Optik werden somit durch ein erfindungsgemäßes Verfahren deutlich erhöht.

Ebenfalls kann es vorteilhaft sein, wenn bei einem erfindungsgemäßen Verfahren der zwischen dem ersten Abschnitt des Vorformlings und dem ersten Bereich des Verbindungsabschnittes eingeschlossene Winkel vor Beginn des Verfahrens kleiner oder gleich 90° ist. Auf diese Weise bildet sich eben gerade keine offene V-förmige Nut, aus welcher die Dekorschicht nach der Einführung in die Nut wieder herausrutschen könnt. Vielmehr bildet sich eine Nut mit parallelen Seitenwänden oder sogar Hinterschneidungen der Nutseitenwände aus, so dass die Dekorschicht innerhalb der Nut, nach der relativen Bewegung der beiden Werkzeuge zueinander, also nach dem Einführen der Dekorschicht in die Nut, in derselben verbleibt. Der anschließende und zum Teil separat ausgeführte Schritt des Zusammenführens der beiden Nutseitenwände durch die Werkzeuge kann somit auch zeitlich beabstandet von dem ersten Schritt des Einführens durchgeführt werden, ohne die Gefahr, dass die Dekorschicht wieder aus der Nut herausrutscht.

Die vorliegende Erfindung wird näher erläutert anhand der Zeichnungsfiguren. Die verwendeten Begriffe "links", "rechts", "oben" und "unten" beziehen sich dabei auf die Figuren in einer Ausrichtung mit normal lesbaren Bezugszeichen. Dabei zeigen:
- Fig. 1: eine Ausführungsform für einen Vorformling für Ausführung einer Ausführungsform des Verfahrens.
- Fig. 2: Situation des erfindungsgemäßen Verfahrens nach dem Zusammenführen des ersten Werkzeugs und dem Auflegen auf dem zweiten Werkzeug gemäß einer Ausführungsform.
- Fig. 3: Situation während der Relativbewegung der beiden Werkzeuge zueinander nach einer Ausführungsform.
- Fig. 4: Situation nach der Relativbewegung der beiden Werkzeuge zueinander nach einer Ausführungsform.
- Fig. 5: Situation nach Entfernen eines Teils des ersten Werkzeuges und während des Zusammenführens der Nutseitenwände gemäß einer Ausführung.
- Fig. 6: Erzeugnis hergestellt durch ein erfindungsgemäßes Verfahren nach einer Ausführungsform.

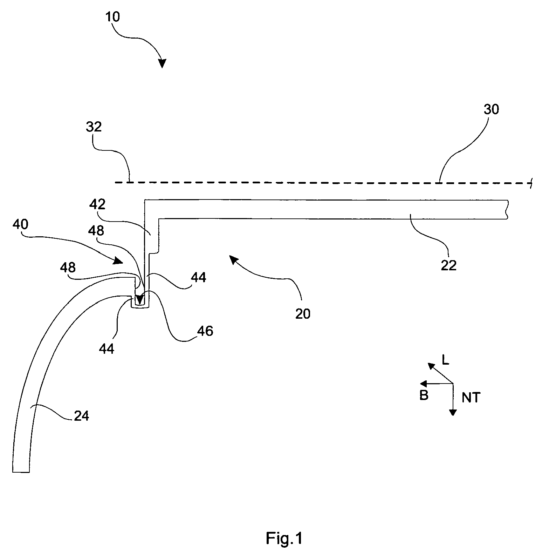

In Fig. 1 ist ein Ausgangspunkt für ein erfindungsgemäßes Verfahren dargestellt. Dabei weist ein Vorformling 20 im Wesentlichen drei Abschnitte auf. Ein erster Abschnitt 22 des Vorformlings 20 ist mit einer Dekorschicht 30 zu bedecken. Diese Dekorschicht 30 ist als Strichlinie bereits oberhalb des ersten Abschnitts 22 dargestellt. Anschließend an den ersten Abschnitt 22 weist der Vorformling 20 einen Verbindungsabschnitt 40 auf. Dieser Verbindungsabschnitt 40 stellt die Verbindung zwischen dem ersten Abschnitt 22 und einem zweiten Abschnitt 24 des Vorformlings 20 her. Der zweite Abschnitt 24 ist in dieser Ausführungsform mit einem abgerundeten Profil versehen, während der erste Abschnitt 20 im Wesentlichen eine gerade, flächige Erstreckung aufweist.

Der Vorformling 20 und die Dekorschicht 30 bilden zusammen das Trägerteil 10, welches in einem an das erfindungsgemäße Verfahren anschließenden Prozessschritt beispielsweise in der Verkleidung eines Kraftfahrzeugs zum Einsatz kommen kann.

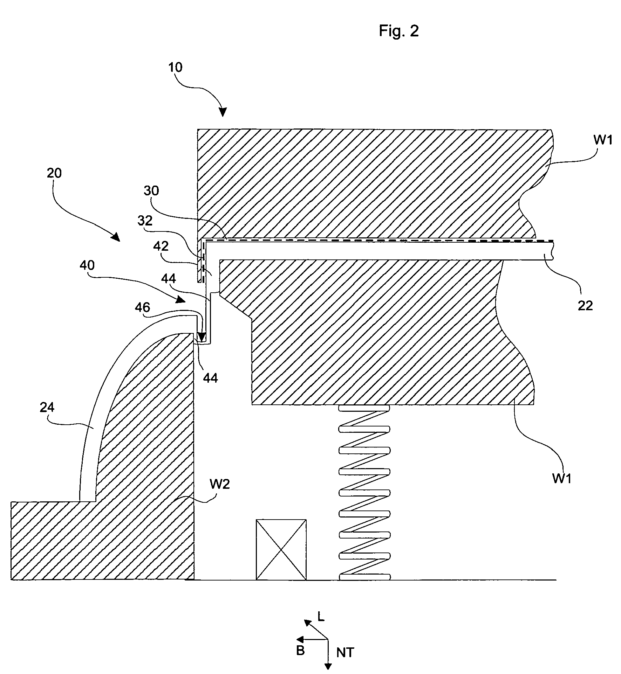

Der Verbindungsabschnitt 40 des Vorformlings 20 ist gebildet aus einem ersten Bereich 42, der an den ersten Abschnitt 22 des Vorformlings 20 anschließt, und aus einem zweiten Bereich 44, der an den zweiten Abschnitt 24 des Vorformlings 20 anschließt. Der zweite Bereich 44 ist mit einer Nut 46 versehen, die eine Tiefenrichtung NT und eine Nut-Längsrichtung L definiert. Diese Nut 46 wird gebildet durch zwei Teilbereiche des zweiten Bereichs 44 des Verbindungsabschnitts 40, nämlich einen ersten Teilbereich, dessen eine flächige Erstreckung sich entlang der Nut-Tiefenrichtung NT erstreckt und die eine erste Innenfläche der Nut ausbildet, und einen zweiten Teilbereich , der sich entlang und im Wesentlichen zumindest abschnittsweise parallel zum ersten Teilbereich erstreckt und eine zweite Innenfläche der Nut ausbildet, die der ersten Innenfläche gegenüber liegt. Die Nut 46 ist innerhalb des zweiten Bereichs 44 ausgebildet. Bei der Ausführungsform gemäß Fig. 1 ist der erste Bereich 42 in der Längsrichtung L gesehen relativ dick, also mit einer gegenüber dem zweiten Bereich 44 relativ großen Materialstärke ausgeführt, vorzugsweise mit derselben Dicke wie der erste Abschnitt 22 des Vorformlings 20 und/oder vorzugsweise um 30% dicker als der zweite Bereich 44 ausgeführt. Der zweite Bereich 44 des Verbindungsabschnitts 40 ist demgegenüber relativ dünn ausgeführt und dementsprechend leichter plastisch zu verformen. Die Nut 46 ist bei der Ausführungsform gemäß Fig. 1 ausschließlich von den sich gegenüberliegenden Nutseitenwänden begrenzt, die beide mit dem Bezugszeichen 48 versehen sind und von denen eine in dieser Situation durch den deformierbaren zweiten Bereich 44 gebildet wird. In dieser Ausgangssituation, die in Fig. 1 dargestellt ist, wird der Vorformling 20 in ein erstes Werkzeug W1 eingelegt und die Dekorschicht 30 auf dem ersten Abschnitt 22 des Vorformlings 20 platziert. Nach dem Einlegen in das erste Werkzeug W1 wird der zweite Abschnitt 24 auf einem zweiten Werkzeug W2 platziert. Im Anschluss wird ein zweites Element des ersten Werkzeugs W1 auf der Oberseite des ersten Abschnitts 22 und der Dekorschicht 30 aufgesetzt. Das Ende dieser Schritte ist in Fig. 2 dargestellt.

Fig. 2 ist zu entnehmen, dass ein zweiteiliges erstes Werkzeug W1 den ersten Abschnitt 22 und die Dekorschicht 30 zusammen einschließt. Darüber hinaus weist das erste Werkzeug W1 einen Endabschnitt auf, welcher den Endabschnitt 32 der Dekorschicht 30 umbiegt und an den Verbindungsabschnitt 40 anlegt. Das Anlegen des Endabschnitts 32 der Dekorschicht 30 erfolgt dabei im ersten Bereich 42 des Verbindungsabschnitts 40.

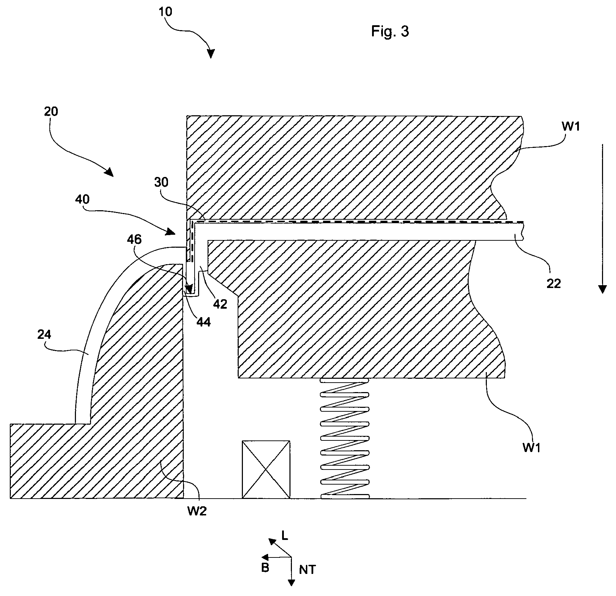

Das erste Werkzeug W1 dient somit in einem ersten Schritt zum Fixieren der Dekorschicht 30 auf dem ersten Abschnitt 22 des Vorformlings 20. Das zweite Werkzeug W2 dient in dieser Situation zum Abstützen des Vorformlings 20, insbesondere des zweiten Abschnitts 24 des Vorformlings 20. Anschließend wird eine Relativbewegung durchgeführt, welche zwischen dem ersten Werkzeug W1 und dem zweiten Werkzeug W2 vonstatten geht. Gemäß der Ausführungsform in den vorliegenden Figuren findet die Relativbewegung dergestalt statt, dass das erste Werkzeug W1 gegenüber dem zweiten Werkzeug W2 verschoben wird. Das zweite Werkzeug 2 ist also während der Relativbewegung ortsfest. Eine Situation während dieses Bewegungsvorgangs ist in Fig. 3 dargestellt.

Wie Fig. 3 zu entnehmen ist, bewegt sich das erste Werkzeug W1 in der Nut-Tiefenrichtung NT relativ gegenüber dem zweiten Werkzeug W2. Das zweite Werkzeug W2 bildet also eine Art Widerlager für die Deformation des Vorformlings 20. Die Deformation des Vorformlings 20, welcher aus der Relativbewegung der beiden Werkzeuge W1 und W2 gegeneinander erfolgt, wird ausschließlich im zweiten Bereich 44 des Verbindungsabschnitts 40 vollzogen. Der zweite Bereich 44 bildet also unter den definierten Prozessbedingungen des Schrittes gemäß Fig. 3 einen Solldeformationsbereich, während die restlichen Bereiche des Vorformlings 20, insbesondere der erste Bereich 42 des Verbindungsabschnittes 40, undeformiert bleiben.

Die Bewegung des ersten Werkzeugs W1 erfolgt dabei entgegen einer Spiralfeder, welche nach Abschluss des erfindungsgemäßen Verfahrens das Werkzeug W1 wieder in seine Ausgangsposition verfahren kann.

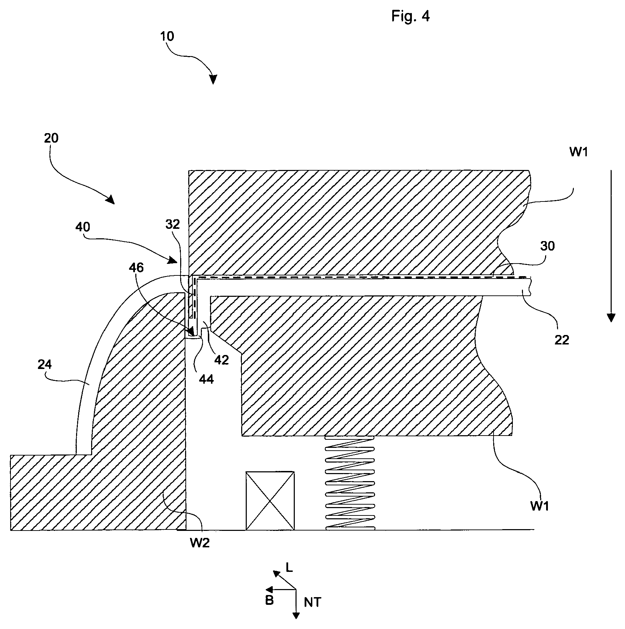

Das Ende des relativen Bewegungsvorgangs zwischen den beiden Werkzeugen W1 und W2 ist in Fig. 4 dargestellt. Dort ist zu erkennen, dass durch die relative Bewegung des ersten Werkzeuges W1 zum zweiten Werkzeug W2 der Endabschnitt 32 der Dekorschicht 30 in die Nut 46 eingeführt worden ist. In dieser Situation ist die Nut 46 nunmehr nicht mehr ausschließlich durch Nutseitenwände 48 aus dem deformierbaren zweiten Bereich 44 gebildet, sondern vielmehr bildet eine Nutenseitenwand zum größten Teil der nichtdeformierbare erste Bereich 42 des Verbindungsabschnittes 40. In dieser Situation befindet sich die Dekorschicht 30 bereits in ihrer endgültigen Position hinsichtlich der Nut-Tiefenrichtung.

Anschließend an die Situation, welche in Fig. 4 dargestellt ist, wird der erste Teil des Werkzeugs W1 abgehoben, so dass der Endabschnitt des Werkzeugs W1, welcher zusammen mit dem Endabschnitt 32 der Dekorschicht 30 in die Nut 46 hineinragt aus dieser Nut 46 abgezogen. Auf diese Weise besteht die Möglichkeit, anschließend die beiden Nutseitenwände 48 zusammenzuführen, um den Endabschnitt 32 der Dekorschicht 30 zwischen den Nutseitenwänden 48 zu verklemmen. Die Bewegung des Zusammenführens erfolgt dabei in Breitenrichtung des Vorformlings 20. Die Bewegung kann dabei beispielsweise durch eine Relativbewegung der Werkzeuge W1 und W2 zueinander erfolgen. Für eine besonders einfache konstruktive Ausführungsform ist dabei das erste Werkzeug W1 ausschließlich für eine Bewegung in Nut-Tiefenrichtung vorgesehen, während das zweite Werkzeug W2 ausschließlich für eine Bewegung in Breitenrichtung des Vorformlings 20 vorgesehen ist. Alternativ kann jedoch auch das zweite Werkzeug W1 rein statisch ausgelegt sein, während das erste Werkzeug W2 Bewegungen in Nut-Tiefenrichtung und auch in Breitenrichtung ausführen kann.

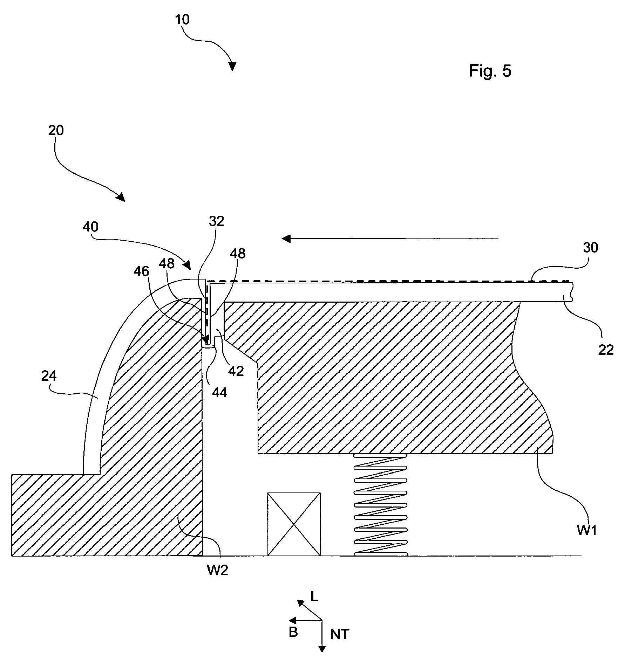

Fig. 5 zeigt den Abschluss des Zusammenführens der beiden Nutseitenwände 48 und damit das Resultat des Fixierens des Endabschnitts 32 der Dekorschicht 30 auf dem Vorformling 20.

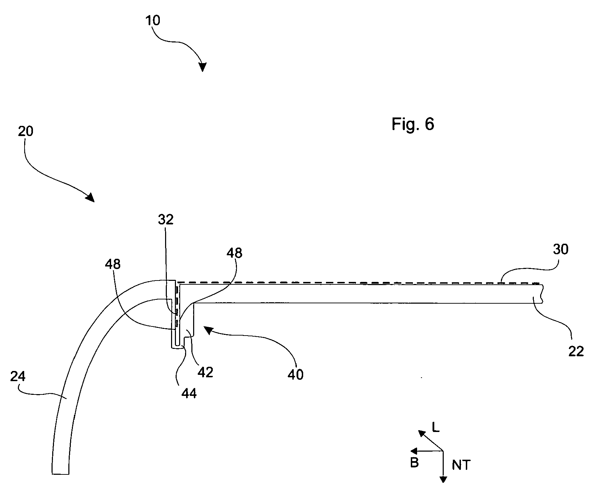

Nach Entfernen der Werkzeuge W1 und W2 bleibt ein Trägerteil 10 bestehen, welches mit einer Dekorschicht 30 auf einem ersten Abschnitt 22 eines Vorformlings versehen worden ist. Diese Situation ist in Figur 6 dargestellt. Zwischen der Dekorschicht 30 und dem zweiten Abschnitt 24 des Vorformlings 20, welcher nicht mit einer Dekorschicht versehen ist, ist dabei ein minimaler bzw. kein Spalt mehr, also ein sogenannter Nullspalt vorhanden. Weiter ist die Oberfläche der Dekorschicht 30 flächenbündig mit der Oberfläche des zweiten Abschnitts 24 ausgestaltet worden. Auf diese Weise ist neben einem nahtlosen Übergang zwischen dem zweiten Abschnitt 24 und der Dekorschicht 30 auch die Möglichkeit für Schmutz- und Staubansammlungen in einer nicht mehr vorhandenen Nut, nämlich dem Nullspalt, zwischen der Dekorschicht 30 und dem zweiten Abschnitt 24 verbessert.

### Bezugszeichen

- 10: Trägerteil
- 20: Vorformling
- 22: erster Abschnitt des Vorformling
- 24: zweiter Abschnitt des Vorformlings
- 30: Dekorschicht
- 32: Endabschnitt der Dekorschicht
- 40: Verbindungsabschnitt
- 42: erster Bereich des Verbindungsabschnittes
- 44: zweiter Bereich des Verbindungsabschnittes
- 46: Nut
- 48: Nutseitenwände
- W1: erstes Werkzeug
- W2: zweites Werkzeug
- NT: Nut-Tiefenrichtung
- B: Breitenrichtung
- L: Längsrichtung

## Patentansprüche

1. Verfahren zum Aufbringen und Befestigen einer Dekorschicht (30) auf einem Vorformling (20), der zur Bildung eines Trägerteils (10) vorgesehen ist, wobei der Vorformling (20) aufweist: einen mit der Dekorschicht (30) zu kaschierenden ersten Abschnitt (22), einen zweiten Abschnitt (24) und einen diese Abschnitte (22, 24) verbindenden Verbindungsabschnitt (40), der eine sich in einer Längsrichtung (L) erstreckende und in einer Nut-Tiefenrichtung (NT) ausgeprägte Nut (46) aufweist sowie aus einem sich entlang der Nut-Längsrichtung (L) und dem ersten Abschnitt (22) erstreckenden ersten Bereich (42) und einem an diesem anschließenden und sich entlang der Nut-Längsrichtung (L) und dem zweiten Abschnitt (24) des Vorformlings (20) erstreckenden zweiten, die Nut (46) ausbildenden Bereich (44) gebildet ist,
wobei der zweite Bereich (44) des Verbindungsabschnitts (40) aus einem bei vorbestimmten Prozessbedingungen deformierbaren Material gebildet ist,
wobei das Verfahren die Schritte aufweist:
- Zusammenfahren eines ersten Werkzeuges (W1), wobei in das erste Werkzeug (W1) der erste Abschnitt (22) des Vorformlings (20) zusammen mit der Dekorschicht (30) eingelegt ist und wobei ein Endabschnitt (32) der Dekorschicht (30) zumindest einen Teil des ersten Bereichs (42) des Verbindungsabschnittes (40) bedeckt,
- Auflegen des zweiten Abschnittes (24) des Vorformlings (20) auf ein zweites Werkzeug (W2),
- Bewegen des ersten und des zweiten Werkzeuges (W1, W2) relativ zueinander in der Nut-Tiefenrichtung (NT), wodurch der zweite Bereich (44) des Verbindungsabschnittes (40) derart deformiert wird, dass dieser eine Nut (46) mit sich vergrößernder Nuttiefe bildet und wobei die relative Bewegung der Werkzeuge (W1, W2) zueinander derart erfolgt, dass der Endabschnitt (32) der Dekorschicht (30) in Nut-Tiefenrichtung (NT) in die Nut (46) eingeführt wird, und
- Zusammendrücken von Nutseitenwänden (48) der Nut (46) zum Fixieren des Endabschnittes (32) der Dekorschicht (32) in der Nut (46).

2. Verfahren nach Anspruch 1 **dadurch gekennzeichnet, dass** durch das Zusammendrücken der Nutseitenwände (48) ein fugenloser Übergang zwischen der Dekorschicht (30) und dem zweiten Abschnitt (24) des Vorformlings (20) ausgebildet wird.

3. Verfahren nach einem der vorangegangenen Ansprüche, **dadurch gekennzeichnet, dass** vor dem Schritt des Zusammendrückens der Nutseitenwände (48) der Endabschnitt (32) der Dekorschicht (30) an beiden Nutseitenwänden (48) der Nut (46) anliegt.

4. Verfahren nach einem der vorangegangenen Ansprüche, **dadurch gekennzeichnet, dass** die Dekorschicht (32) auf dem Vorformling (20) ausschließlich mittels Klemmung zwischen den Nutseitenwänden (48) befestigt wird.

5. Verfahren nach einem der vorangegangenen Ansprüche, **dadurch gekennzeichnet, dass** die Bewegung des ersten und des zweiten Werkzeuges (W1, W2) relativ zueinander in der Nut-Tiefenrichtung (NT) eine reine Parallelverschiebung der beiden Abschnitte (22, 24) des Vorformlings (20) relativ zueinander ist.

6. Verfahren nach einem der Ansprüche 1 bis 4, **dadurch gekennzeichnet, dass** die Bewegung des ersten und des zweiten Werkzeuges (W1, W2) relativ zueinander in der Nut-Tiefenrichtung (NT) eine aus Parallelverschiebung und Rotation kombinierte Bewegung der beiden Abschnitte (22, 24) des Vorformlings (20) relativ zueinander ist.

7. Verfahren nach einem der vorangegangenen Ansprüche, **dadurch gekennzeichnet, dass** die Bewegung des ersten und des zweiten Werkzeuges (W1, W2) relativ zueinander in der Nut-Tiefenrichtung (NT) gleichzeitig auch die Nutseitenwände (48) zusammendrückt.

8. Verfahren nach einem der vorangegangenen Ansprüche, **dadurch gekennzeichnet, dass** zumindest ein Teil eines der Werkzeuge (W1, W2) erhitzbar ist, um den an diesem Teil anliegenden Abschnitt (22, 24) des Vorformlings (20) und/oder die an diesem Teil anliegende Dekorschicht (30) zu erwärmen.

9. Verfahren nach einem der vorangegangenen Ansprüche, **dadurch gekennzeichnet, dass** die Bewegung des ersten und des zweiten Werkzeuges (W1, W2) relativ zueinander in der Nut-Tiefenrichtung (NT) so weit ausgeführt wird, dass anschließend die Dekorschicht (30) bündig mit dem zweiten Abschnitt (24) des Vorformlings (20) liegt.

10. Verfahren nach einem der vorangegangenen Ansprüche, **dadurch gekennzeichnet, dass** der zwischen dem ersten Abschnitt (22) des Vorformlings (20) und dem ersten Bereich (42) des Verbindungsabschnittes (40) eingeschlossene Winkel vor Beginn des Verfahrens kleiner oder gleich 90° sind.

## Claims

1. A method for applying and fastening a decorative layer (30) on a preform (20) which is provided for the formation of a support part (10), wherein the preform (20) comprises: a first section (22) which is to be laminated with the decorative layer (30), a second section (24), and a connecting section (40) connecting these sections (22, 24), which comprises a groove (46) extending in a longitudinal direction (L) and pronounced in a groove depth direction (NT) and is formed from a first region (42) extending along the groove longitudinal direction (L) and the first section (22) and from a second region (44), forming the groove (46), adjoining thereto, and extending along the groove longitudinal direction (L) and the second section (24) of the preform (20), wherein the second region (44) of the connecting section (40) is formed from a material which is deformable under predetermined process conditions,
wherein the method comprises the steps of:
- moving together a first tool (W1), wherein the first section (22) of the preform (20) together with the decorative layer (30) is inserted into the first tool (W1) and wherein an end section (32) of the decorative layer (30) covers at least a portion of the first region (42) of the connecting section (40),
- placing the second section (24) of the preform (20) onto a second tool (W2),
- moving the first and a second tool (W1, W2) relative to one another in the groove depth direction (NT), whereby the second region (44) of the connecting section (40) is deformed such that the latter forms a groove (46) with an increasing groove depth and wherein the relative movement of the tools (W1, W2) with respect to one another takes place such that the end section (32) of the decorative layer (30) is introduced in the groove depth direction (NT) into the groove (46), and
- pressing together side walls (48) of the groove (46) for fixing the end section (32) of the decorative layer (32) in the groove (46).

2. The method according to claim 1, **characterized in that** by the pressing together of the groove side walls (48) a jointless transition is formed between the decorative layer (30) and the second section (24) of the preform (20).

3. The method according to one of the preceding claims, **characterized in that** before the step of pressing together the groove side walls (48), the end section (32) of the decorative layer (30) lies against both groove side walls (48) of the groove (46).

4. The method according to one of the preceding claims, **characterized in that** the decorative layer (32) is fastened on the preform (20) exclusively by means of clamping between the groove side walls (48).

5. The method according to one of the preceding claims, **characterized in that** the movement of the first tool and of the second tool (W1, W2) relative to one another in the groove depth direction (NT) is a pure parallel displacement of the two sections (22, 24) of the preform (20) relative to one another.

6. The method according to one of Claims 1 to 4, **characterized in that** the movement of the first tool and of the second tool (W1, W2) relative to one another in the groove depth direction (NT) is a movement, combined from parallel displacement and rotation of the two sections (22, 24) of the preform (20) relative to one another.

7. The method according to one of the preceding claims, **characterized in that** the movement of the first tool and of the second tool (W1, W2) relative to one another in the groove depth direction (NT) simultaneously also' presses the groove side walls (48) together.

8. The method according to one of the preceding claims, **characterized in that** at least a portion of one of the tools is able to be heated, in order to heat the section (22, 24) of the preform (20) lying against this part, and/or the decorative layer (30) lying against this part.

9. The method according to one of the preceding claims, **characterized in that** the movement of the first tool and of the second tool (W1, W2) relative to one another in the groove depth direction (NT) is configured to be of such an extent that subsequently the decorative layer (30) lies flush with the second section (24) of the preform (20).

10. The method according to one of the preceding claims, **characterized in that** the angle formed between the first section (22) of the preform (20) and the first region (42) of the connecting section (40) is less than or equal to 90° before the start of the method.

## Revendications

1. Procédé d'application et de fixation d'une couche décorative (30) sur une ébauche (20) qui est prévu pour former une pièce support (10), l'ébauche (20) présentant: une première section (22) à plaquer avec la couche décorative (30), une seconde section (24) et une section de connexion (40) reliant ces sections (22, 24) et présentant une rainure (46) s'étendant dans un sens longitudinal (L) et formée dans un sens de la profondeur de la rainure (NT) et composée d'une première zone (42) s'étendant le long du sens longitudinal de la rainure (L) et de la première section (22) et d'une seconde zone (44) s'étendant le long du sens longitudinal de la rainure (L) et de la seconde section (24) de l'ébauche (20) et constituant la rainure (46),
la seconde zone (44) de la section de connexion (40) étant constituée d'un matériau déformable dans des conditions de traitement prédéfinies,
ce procédé présentant les étapes suivantes :
- Rapproche d'un premier outil (W1), la première section (22) de l'ébauche (20) étant insérée avec la couche décorative (30) dans le premier outil (W1) et une section terminale (32) de la couche décorative (30) recouvrant au moins une partie de la première zone (42) de la section de connexion (40),
- pose de la seconde section (24) de l'ébauche (20) sur un second outil (W2),
- déplacement du premier et du second outil (W1, W2) l'un par rapport à l'autre dans le sens de la profondeur de la rainure (NT), ce qui a pour effet que la seconde zone (44) de la section de connexion (40) est déformée de manière à constituer une rainure (46) dont la profondeur de rainure est croissante, le mouvement relatif des outils (W1, W2) l'un par rapport à l'autre ayant lieu de manière à ce que la section terminale (32) de la couche décorative (30) soit introduite dans la rainure (46) dans le sens de la profondeur de la rainure (NT), et
- compression mutuelle des parois latérales (48) de la rainure (46) pour fixer la section terminale (32) de la couche décorative (32) dans la rainure (46).

2. Procédé selon la revendication 1, **caractérisé en ce que**, par la compression mutuelle des parois latérales de la rainure (48), une transition sans joint entre la couche décorative (30) et la seconde section (24) de l'ébauche (20) est réalisée.

3. Procédé selon une des revendications précédentes, **caractérisé en ce que**, avant l'étape de compression mutuelle des parois latérales de la rainure (48), la section terminale (32) de la couche décorative (30) repose sur les deux parois latérales de rainure (48) de la rainure (46).

4. Procédé selon une des revendications précédentes, **caractérisé en ce que** la couche décorative (32) est fixée sur l'ébauche (20) exclusivement par serrage entre les parois latérales de la rainure (48).

5. Procédé selon une des revendications précédentes, **caractérisé en ce que** le mouvement du premier et du second outil (W1, W2) l'un par rapport à l'autre dans le sens de la profondeur de la rainure (NT) est un pur décalage parallèle mutuel des deux sections (22, 24) de l'ébauche (20).

6. Procédé selon une des revendications 1 à 4, **caractérisé en ce que** le mouvement du premier et du second outil (W1, W2) l'un par rapport à l'autre dans le sens de la profondeur de la rainure (NT) est un mouvement mutuel combiné de décalage parallèle et de rotation des deux sections (22, 24) de l'ébauche (20).

7. Procédé selon une des revendications précédentes, **caractérisé en ce que** le mouvement du premier et du second outil (W1, W2) l'un par rapport à l'autre dans le sens de la profondeur de la rainure (NT) comprime en même temps aussi les parois latérales de la rainure l'une contre l'autre (48).

8. Procédé selon une des revendications précédentes, **caractérisé en ce qu'**au moins une partie d'un des outils (W1, W2) peut être chauffée afin de chauffer la section (22, 24) reposant sur cette partie de l'ébauche (20) et/ou la couche décorative reposant sur cette partie (30).

9. Procédé selon une des revendications précédentes, **caractérisé en ce que** le mouvement du premier et du second outil (W1, W2) l'un par rapport à l'autre dans le sens de la profondeur de la rainure (NT) est exécuté jusqu'à ce que la couche décorative (30) se trouve ensuite à fleur avec la seconde section (24) de l'ébauche (20).

10. Procédé selon une des revendications précédentes, **caractérisé en ce que** l'angle circonscrit entre la première section (22) de l'ébauche (20) et la première zone (42) de la section de connexion (40) est inférieure ou égale à 90° avant le début du processus.
